# EUROPEAN PATENT SPECIFICATION

(11) **EP 1 580 940 B1**
(45) Date of publication and mention of the grant of the patent: **28.10.2009**
(21) Application number: 05101736.6
(22) Date of filing: 07.03.2005
(51) Int. Cl.: H04L 12/56

(54) **Method, apparatus and computer readable medium storing a software program for selecting routes to be distributed within networks**
Verfahren, Vorrichtung und Computer lesbares Medium welches ein Softwareprogramm speichert zur Auswahl von Routen die in Netzwerken verteilt werden sollen
Méthode, appareil et support d'enregistrement pour ordinateur mémorisant un programme pour la sélection de routes devant être distribués dans des réseaux

(30) Priority: 25.03.2004 US 556169 P; 22.12.2004 US 19845
(43) Date of publication of application: 28.09.2005
(73) Proprietor: AT&T Corp., New York, NY 10013-2412 (US)
(72) Inventor: Chase, Christopher, J., 07728, Freehold (US); van de Merwe, Jacobus, Erasmus, 07974, New Providence (US); Greenberg, Albert, 07901, Summit (US); Iloglu, Ali, Murat, 08879, Laurance Harbor (US); Kalmanek, Charles, 07078, Short Hills (US); Mulligan, John, 08723, Brick (US); Nguyen, Han, 07746, Marlboro (US); Rexford, Jennifer, 07302, Jersey City (US); Saad, Samir, 07740, Long Branch (US); Shaikh, Aman, 07940, Madison (US)
(74) Representative: Harding, Richard Patrick

(56) References cited:
- US-A1- 2003 174 653
- BATES T ET AL: "BGP Route Reflection - An Alternative to Full Mesh IBGP" IETF, 30 April 2000 (2000-04-30), XP002294497 INET
- ROSEN; REKHTER: "BGP/MPLS VPNs" IETF, November 1998 (1998-11), pages 1-24, XP015034768 Internet
- REKHTER; GROSS: "Application of the boarder Gateway Protocol in the Internet RFC1772" IETF, XP015007559 Internet
- TIMOTHY G. GRIFFIN: "Interdomain Routing and BGP Routing"[Online] 3 May 2003 (2003-05-03), XP000863825 Internet Retrieved from the Internet: URL:www.teunisott.com/CIS656/CIS656.S.03/G riffin.ppt> [retrieved on 2009-02-10]

## Description

### FIELD OF THE INVENTION

The invention relates to the field of communications networks and, more specifically, to selection and distribution of routes in Internet Protocol networks.

### BACKGROUND OF THE INVENTION

In traditional routing and forwarding of Internet Protocol (IP) packets, packets are often routed hop-by-hop using a combination of Border Gateway Protocol (BGP) and at least one Interior Gateway Protocol (IGP). In general, BGP functions include, among others, dissemination of destination reachability information, such as identification and selection of candidate egress edge routers. The BGP protocol requires full mesh of Interior-BGP (IBGP) peering among routers to avoid looping issues. The IGP functions typically include topology discovery and selection of a shortest path, as well as selection of an associated immediate next-hop toward a given egress edge router. In other words, BGP and IGP are generally used in combination by each network router to derive the immediate next hop towards a given destination.

As demand for IP service continues to increase, some service providers have implemented route-reflection in order to scale BGP to support larger IP networks. In networks utilizing route-reflection, at least one router is typically deployed as a route-reflector. The route-reflector essentially selects routes to announce to routers with which the route-reflector is configured to communicate. Although route-reflection performs well in certain networks, situations exist in which the use of route-reflection for scaling IP networks is constrained by the nature of a route-reflector itself being a router.

One potential disadvantage is that the routes available for selection by a route-reflector are limited to the routes that the route-reflector itself would use as a router. In other words, a selected and announced "best route" is selected solely from the perspective of the route-reflector performing the selection and announcement. As such, a route-reflector needs to be located in topological proximity to its client routers, sometimes requiring more route-reflectors to be deployed than may normally be warranted by capacity and redundancy considerations.

Furthermore, current route-reflector route selection mechanisms are confined to standard BGP route selection processing. As such, using route-reflectors, configurable routing policies are limited to policy constructs that are expressed solely in terms of BGP attributes and static route-maps such that implementation of dynamic policies requires continuous reconfiguration of route-reflectors and associated routers. Although such limitations have a negligible impact in many networks, there are networks in which such limitations may be detrimental to operation of the network.

As such, a need exists in the art for a method and apparatus for receiving available routes from a plurality of routers, and for selecting at least one route for each of the routers, wherein the routes are selected from the perspective of the routers from which the available routes are received.

US 2003/0174653 discloses a method for exchanging routing information between I-BGP routers within an autonomous system enabling the routers to communicate a set of possible best routes to a given destination, rather than communicating only a single best route.

"BGP Route Reflection - An Alternative to Full Mesh I-BGP" by T. Bates et al, IETF, 30 April 2000, XP-002294497 describes a method known as "Route Reflection" to alleviate the need for full mesh I-BGP.

According to the present invention there is a provided a method, a computer modable storage medium storing a software program and apparatus for managing route selection in a network, as defined in the independent claims 1, 9 and 16 respectively.

### BRIEF DESCRIPTION OF THE DRAWINGS

The teachings of the present invention can be readily understood by considering the following detailed description given by way of example with reference to the accompanying drawings, in which:

FIG. 1 depicts a communication architecture comprising a Routing Control Point utilizing Internal-BGP (iBGP);

FIG. 2 depicts a communication architecture comprising a Routing Control Point utilizing iBGP and External-BGP (eBGP);

FIG. 3 depicts a preferred communication architecture comprising a plurality of Routing Control Points associated with a respective plurality of networks;

FIG. 4 depicts a flow diagram of a method according one embodiment of the invention;

FIG. 5 depicts a detailed flow diagram of the method depicted in FIG. 4;

FIG. 6 depicts a high level block diagram of a Routing Control Point architecture; and

FIG. 7 depicts a high level block diagram of a general purpose computer suitable for use in performing the functions described herein.

To facilitate understanding, identical reference numerals have been used, where possible, to designate identical elements that are common to the figures.

### DETAILED DESCRIPTION OF THE INVENTION

In the following description the words "invention" and "embodiment are meant in the sense to be interpreted as used to explain the technical background only and do not describe the scope of protection. The present invention is discussed in the context of IP networks including edge routers and associated neighbor routers; however, the methodology of the invention can readily be applied to other networks and network topologies. In general, the present invention provides a scalable, operationally simple routing decision mechanism for use in IP networks. The present invention obviates the need for use of router-based route-reflectors (which perform route selection from the perspective of the route-reflector) for selection and distribution of routing information

Using the present invention, routes are selected for a router from the perspective of that router (i.e., based on the iBGP topological view of the router). As such, the present invention obviates the need to maintain a topological proximity to the routers, thereby enabling a larger set of routers in multiple geographical clusters to be served. The present invention enables selection of different routes for different routers according to network conditions such as network topology states, traffic-distribution considerations, routing service policies, and the like. The present invention is capable of selecting and distributing more than one route to a router in situations in which more than one route is available. Furthermore, the present invention coordinates route selection and distribution for a router with other configuration changes for that router, such as insertion of packet filters, implementation of quality of service policies, and the like.

The present invention enables selection of routes based on information beyond standard BGP routing information. In particular, the present invention enables execution of sophisticated routing decisions based on network topology, traffic load, traffic performance, network-specific and customer-specific routing policies, edge router capabilities, and like parameters. The routing capabilities provided by the present invention include dynamic routing based on a variety of parameters, dynamic routing for application servers based on load and customer subscription of services, enabling dynamic reachability between otherwise unreachable domains on a per-application basis (as in voice-over-IP), and like dynamic routing capabilities.

The present invention of a Routing Control Point (RCP) essentially operates as a logically centralized point located above the network elements that simplifies the operation of the network and supports a diverse selection of customer-facing services. In one embodiment, in order to enable backwards compatibility with the embedded base of network equipment, a RCP may communicate with network elements using a standard protocol, such as the BGP protocol. In one such embodiment, the RCP uses BGP to send and receive routes for any defined address family (such as IPv4, a virtual private network, and the like), and to set route attributes in order to drive router decisions (for path selection, quality of service policies, data collection, traffic filtering, and the like).

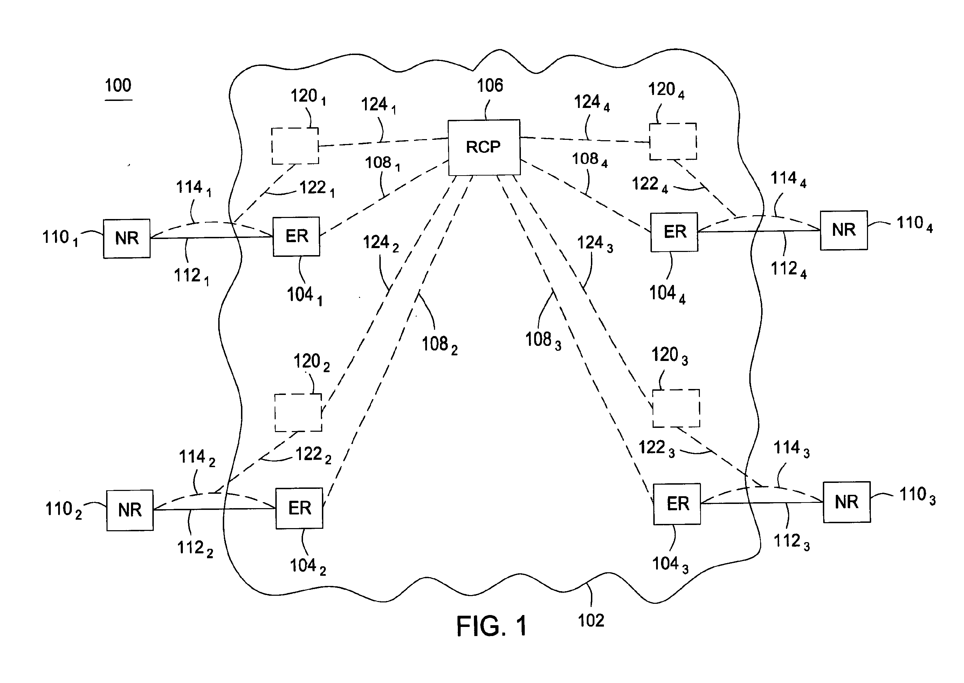

FIG. 1 depicts a communication architecture comprising a Routing Control Point utilizing Internal-BGP (iBGP). Specifically, communication architecture 100 of FIG. 1 comprises an autonomous system (AS) 102 and a plurality of neighbor routers (NR) 110₁ - 110₄ (collectively, NRs 110). The AS 102 comprises a plurality of edge routers (ER) 104₁ - 104₄ (collectively, ERs 104), and a routing control point (RCP) 106. Although a single AS (network) is depicted, additional ASs may be deployed. Furthermore, it should be noted that at least a portion of the NRs 110 may be located within at least one adjacent AS (not shown).

As depicted in FIG. 1, the ERs 104 and NRs 110 communicate via communication links 112₁ - 112₄ (collectively, communication links 112). The ER-NR router pairs (e.g., ER₁ and NR₁) run respective External-BGP (eBGP) sessions 114₁ - 114₄ (collectively, eBGP sessions 114) over associated communication links 112. Although not depicted, those skilled in the art will appreciate that ERs 104 communicate via a plurality of communication links and, optionally, network elements.

The ERs 104 maintain respective iBGP sessions 108₁ - 108₄ (collectively, iBGP sessions 108) with RCP 106. As such, rather than maintaining a full mesh of iBGP sessions between each of the ERs 104, the ERs 104 maintain respective iBGP sessions 108 only with RCP 106. Thus, network architecture 100 of FIG. 1 obviates the need for reconfiguration of the ERs 104 since each of the ERs 104 exports routes to RCP 106 following standard BGP processing rules. The iBGP sessions 108 ensure that all available routes are visible to the ERs 104. In one embodiment, iBGP sessions 108 are maintained using an IGP, such as Open Shortest Path First (OSPF).

Using architecture 100 of FIG. 1, RCP 106 is able to select routes for the ERs 104 that each of the ERs 104 would have selected if a full iBGP mesh existed between the ERs 104. Since route selection typically involves use of network topology information, in one embodiment network topology information is provided as an input to RCP 106. Those skilled in the art will appreciate that monitoring of network topology information is often performed anyway in support of performance monitoring and root cause analysis.

Although not depicted, in one embodiment, an existing full-mesh iBGP network may be transitioned to replace the full-mesh configuration with at least one RCP. For example, new iBGP sessions may be configured between the RCP and the ERs while existing iBGP sessions remain intact. The RCP may be deployed in "read-only" operating mode in order to receive BGP routes from the ERs until the ERs have been reconfigured for use with RCP, at which time the RCP operating mode is changed from "read-only" to "read-write", enabling the RCP to distribute selected routes to the respective ERs within the AS.

In this embodiment, the routers within the AS (illustratively, AS 102 of FIG. 1) choose routes distributed by the RCP over routes received from routers in adjacent ASs (e.g., NRs 110) via eBGP. This prioritization of BGP routes may be accomplished by configuring the RCP to set a "local preference" route attribute (associated with each route) to make its routes more attractive than BGP routes learned from another source. For example, if the import policies on the eBGP sessions assign local preference values in the range 80-100, the RCP may set the local preference value to 110 for each distributed route.

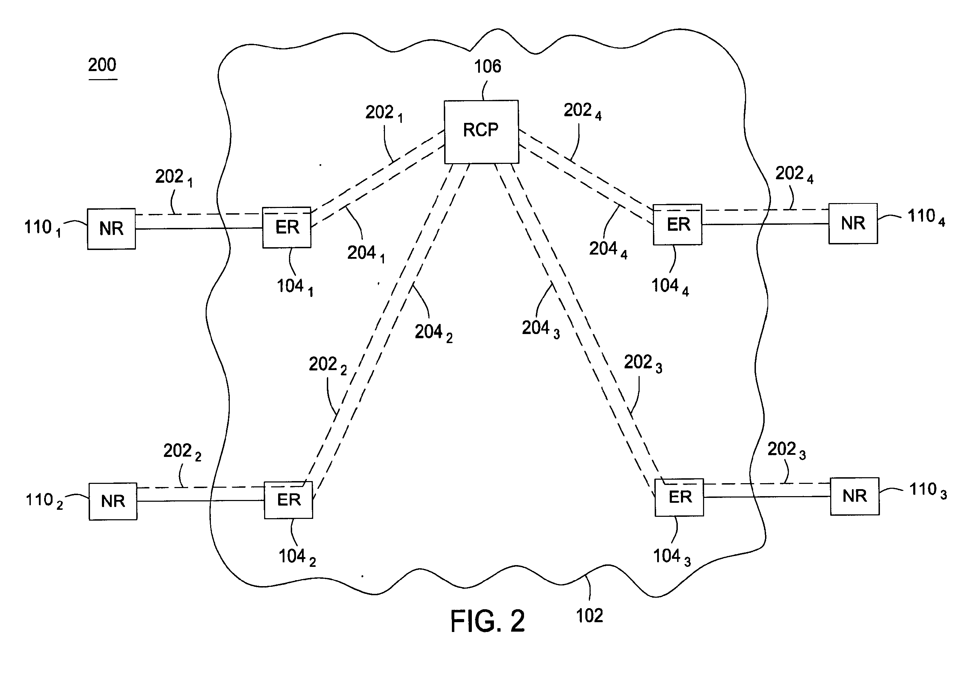

The use of RCP 106 for route selection and distribution has numerous advantages over the use of an iBGP mesh; however, as depicted in FIG. 1, the routes that are exposed to RCP 106 are still partially filtered. In other words, for each destination prefix, an ER must select one route and export that route to RCP 106. As such, RCP 106 does not have visibility to all available routes, but rather only to the routes selected by the respective ERs 104 based on local information available to each of the ERs 104. In one embodiment, this restriction on the visibility of the RCP to all available routes may be removed by configuring eBGP sessions to terminate on RCP 106 (rather than on respective ERs 104). This embodiment is depicted and described with respect to FIG. 2.

FIG. 2 depicts a communication architecture comprising a Routing Control Point utilizing iBGP and External-BGP (eBGP). Elements of FIG. 2 that are the same as or similar to those of FIG.1 are designated with identical reference numerals and are described in detail above. As depicted in FIG. 1 and FIG. 2, RCP 106 maintains respective iBGP sessions 108 with the ERs 104 in order to exchange routing information. As described above, RCP 106 obtains visibility to all available routes by configuring the eBGP sessions to terminate on the RCP (rather than on respective the ERs 104). As such, eBGP sessions 114 of FIG. 1 that terminate on the ERs 104 are replaced with respective eBGP sessions 202₁ - 202₄ (collectively, eBGP sessions 202) that terminate on RCP 106.

Similar to the embodiments described above with respect to FIG. 1, the network architecture 200 of FIG. 2 obviates the need for reconfiguration of the ERs 104 and corresponding NRs 110. In this embodiment, RCP 106 ensures that each of the ERs 104 only has visibility to routes deemed by RCP 106 as appropriate for selection by the respective ERs 104. Although the ERs 104 still perform route selection process, RCP 106 filters the routes available for selection. Since the ERs 104 no longer maintain eBGP sessions with the respective NRs 110, RCP 106 communicates the selected routes to the NRs 110 (corresponding to the ER for which the route was selected) via the eBGP sessions 202.

Although not depicted, in one embodiment, an existing network using iBGP and eBGP may be transitioned to support use of at least one RCP. The new iBGP sessions may be configured between the RCP and existing routers (illustratively, ERs 104 of FIG. 2) using a methodology similar to the transition methodology described above with respect to FIG. 1. An eBGP session (multihop enabled) may be established between the RCP and routers in adjacent ASs (e.g., NRs 110). Since the RCP IP address must be reachable from the NRs 110, each of the NRs 110 may be configured with a static route to the RCP IP address, which may in turn be associated interfaces connecting the ERs 104 to respective NRs 110.

Furthermore, in the reverse direction, each ER 104 is configured with a static route to the respective NRs 110 (associated with the interfaces connecting ERs 104 to NRs 110). The ERs 104 redistribute the respective static routes using an IGP (such as OSPF), thereby enabling RCP 106 to reach the ERs 104. It should be noted that, alternatively, RCP 106 may be configured with static routes that associate each eBGP session (established with each ER 104) with a loopback address associated with each respective NR 110.

This configuration enables establishment of respective eBGP sessions between RCP 106 and each of the NRs 110, facilitating the forwarding of BGP messages as IP packets that traverse the associated ERs 104. This configuration forces the respective eBGP sessions between RCP 106 and NRs 110 to traverse the respective ERs 104 such that when a link between an ER-NR pair (e.g., ER 104₁ and NR 110₁) fails, the associated eBGP session is torn down and routes previously received from ER 104₁ are withdrawn.

In another embodiment, the functionality described with respect to the preceding embodiment may be provided without implementing configuration changes on routers in adjacent ASs. For example, RCP 106 may maintain iBGP sessions with the ERs 104, and each ER 104 may maintain respective eBGP sessions with the NRs 110. It should be noted that using this architecture, each of the ERs 104 still performs route selection for eBGP routes received from the respective NRs 110, and distributes the selected routes to RCP 106 via iBGP. The RCP 106 may, however, based on RCP route selection processing, inform the NRs 110 that selection of a different route is preferable.

In one embodiment, in order to provide RCP 106 access to eBGP routes, at least one BGP Monitor may be deployed for sending eBGP routes to RCP 106. As depicted in FIG. 1, for example, BGP Monitors 120₁ - 120₄ (collectively, BGP Monitors 120) are optionally deployed as standalone devices in communication with respective eBGP-speaking routers (illustratively, NRs 110) via communication links 122₁ - 1224. The BGP Monitors 120 communicate with RCP 106 via respective communication links 124₁ - 124₄. In another embodiment (not depicted), at least one BGP Monitor may be implemented as a portion of an eBGP-speaking router (illustratively, ERs 104) for monitoring the eBGP sessions 114. As such, deployment of at least one BGP Monitor enables a service provider to provide functionality the same as or similar to the functionality described with respect to FIG. 2, while maintaining a network architecture substantially similar to that described with respect to FIG. 1.

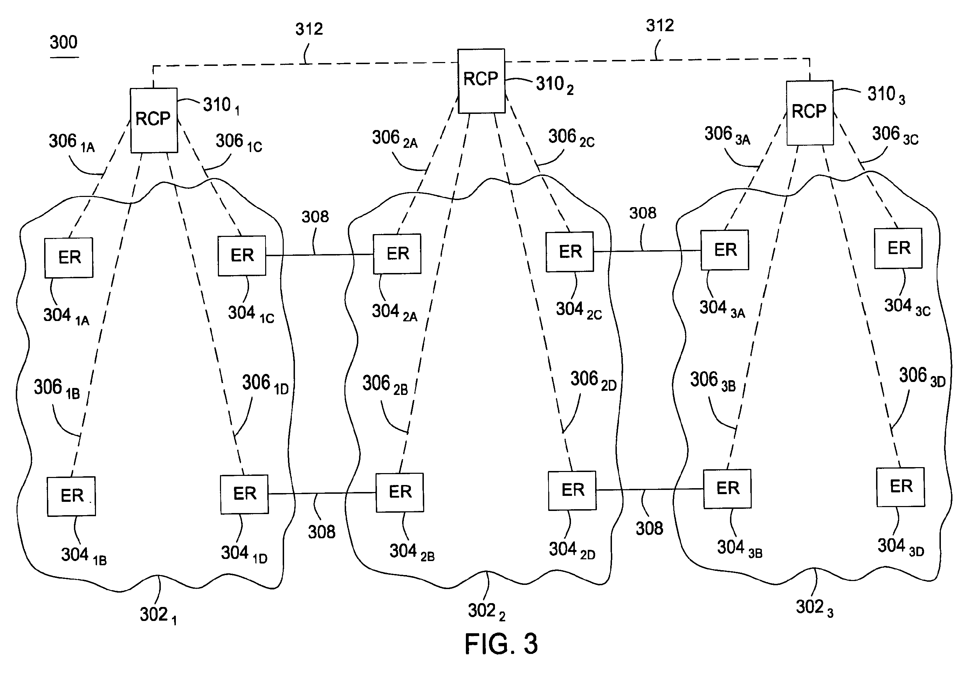

In one embodiment, additional RCPs may be deployed in order to provide redundancy. In this embodiment, assuming use of RCPs in combination with iBGP and eBGP (as described with respect to FIG. 2), each RCP maintains an iBGP session with each ER in the AS (network) in which the RCPs are deployed. Similarly, each RCP maintains an eBGP session with each NR associated with the AS in which the RCPs are deployed (via a corresponding ER and edge communication link). In another embodiment, described herein with respect to FIG. 3, the need for eBGP sessions is completely removed.

FIG. 3 depicts a preferred communication architecture comprising a plurality of Routing Control Points associated with a respective plurality of networks. Specifically, communication architecture 300 of FIG. 3 comprises a plurality of autonomous systems (ASs) 302₁ - 302₃ (collectively, ASs 302) and an associated plurality of RCPs 310₁ - 310₃ (collectively, RCPs 310). The AS 302₁ comprises a plurality of edge routers (ER) 304_{1A} - 304_{1D} (collectively, ERs 304₁), AS 302₂ comprises a plurality of edge routers (ER) 304_{2A} - 304_{2D} (collectively, ERs 304₂), and AS 302₃ comprises a plurality of edge routers (ER) 304_{3A} - 304_{3D} (collectively, ERs 304₃). The ERs 304₁, 304₂, and 304₃ are collectively referred to as ERs 304.

Although not depicted, those skilled in the art will appreciate that the ERs 304 within each of the respective service provider networks 302 are connected via communication links and, optionally, network elements. As depicted in FIG. 3, ERs 304_{1C} and 304_{1D} communicate with ERs 304_{2A} and 304_{2B}, respectively, via communication links 308, and ERs 304_{2C} and 304_{2D} communicate with ERs 304_{3A} and 304_{3B}, respectively, via communication links 308. The ERs 304₁ maintain respective iBGP sessions 306_{1A} - 306_{1D} (collectively, iBGP sessions 306₁) with RCP 310₁, ERs 304₂ maintain respective iBGP sessions 306_{2A} - 306_{2D} (collectively, iBGP sessions 306₂) with RCP 310₂, and ERs 304₃ maintain respective iBGP sessions 306_{3A} - 306_{3D} (collectively, iBGP sessions 306₃) with RCP 310₃. The iBGP sessions 306₁, 306₂, and 306₃ are collectively referred to as iBGP sessions 306.

As such, rather than maintaining a full mesh of iBGP sessions between each of the ERs 304 within the respective networks 302, the ERs 304 maintain the iBGP sessions 306 only with the respective RCPs 310. Thus, network architecture 300 of FIG. 3 obviates the need for reconfiguration of the ERs 304 since each of the ERs 304 exports routes to the respective RCPs 310 following standard BGP processing rules. The iBGP sessions 306 ensure that all available routes are visible to the ERs 304. In one embodiment, the iBGP sessions 306 are maintained using an IGP (such as OSPF).

As depicted in FIG. 3, RCP 310₁ communicates with RCP 310₂, and RCP 310₂ communicates with RCP 310₃, using an inter-domain routing protocol 312. The RCPs 310 exchange routing information with each other, thereby eliminating the need to use eBGP for inter-domain route distribution. The inter-domain routing protocol may comprise BGP and like inter-domain routing protocols as known in the art. Although not depicted, in one embodiment, each of the RCPs 310 may be physically interconnected in order to facilitate use of the inter-domain routing protocol 312.

In each of the embodiments described with respect to FIG. 1, FIG. 2, and FIG. 3, the RCP functionality is depicted as physically centralized in one RCP associated with each network. In one embodiment, the RCP functionality may be logically, but not physically, centralized. In other words, RCP functionality may be implemented in a physically distributed fashion while performing a logically centralized function. For example, a plurality of RCPs may be deployed within a given network (e.g., AS 302₁), in which case each deployed RCP maintains an iBGP session to each of the edge routers in the network. This embodiment provides adequate redundancy as long as each deployed RCP is capable of handling the load required to support an entire network. In a similar embodiment, a plurality of RCPs may be deployed within a given network, where each of the RCPs maintains an iBGP session to a subset of the edge routers in the network.

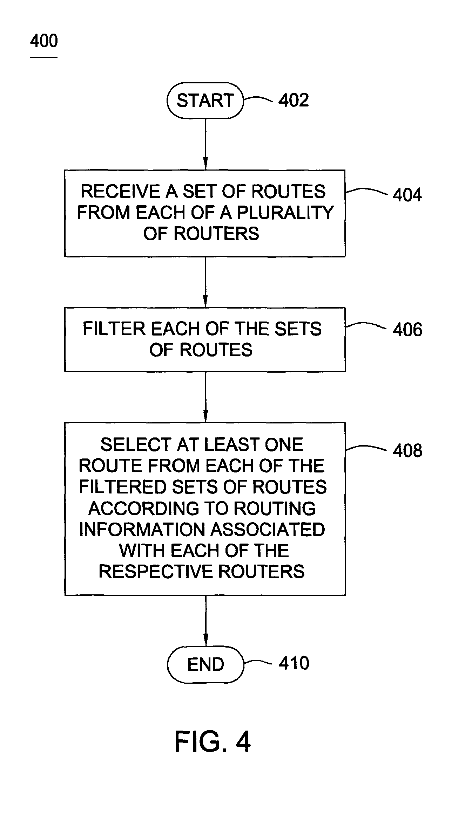

FIG. 4 depicts a flow diagram of a method according to one embodiment of the invention. Specifically, method 400 of FIG. 4 comprises a method for managing route selection in a network. The method 400 is entered at step 402 and proceeds to step 404. At step 404, a set of routes is received from each of a plurality of routers. At step 406, each of the sets of routes is filtered. At step 408, at least one route is selected from each of the filtered sets of routes, wherein each of the selected routes is selected according to routing information associated with each of the respective routers.

In one embodiment, routing information comprises at least one of: a route attribute, a network topology parameter, a routing policy parameter, and a router configuration parameter. In another embodiment, the routing information comprises at least one of: network-specific routing policy information and customer-specific routing policy information. As such, in one embodiment, a routing policy parameter comprises at least one of: a network-specific routing policy parameter and a customer-specific routing policy parameter. The method 400 then proceeds to step 410 where method 400 ends.

In one embodiment, from the perspective of a router utilizing a routing control point for route selection, a substantially similar method comprises transmitting a set of routes, wherein the transmitted set of routes comprises at least one available route, and receiving a filtered set of routes, wherein the filtered set of routes comprises at least one preferred route from the transmitted set of routes. It should be noted that the set of routes transmitted by the router is transmitted towards at least one routing control point using at least one protocol (such as BGP), as described herein.

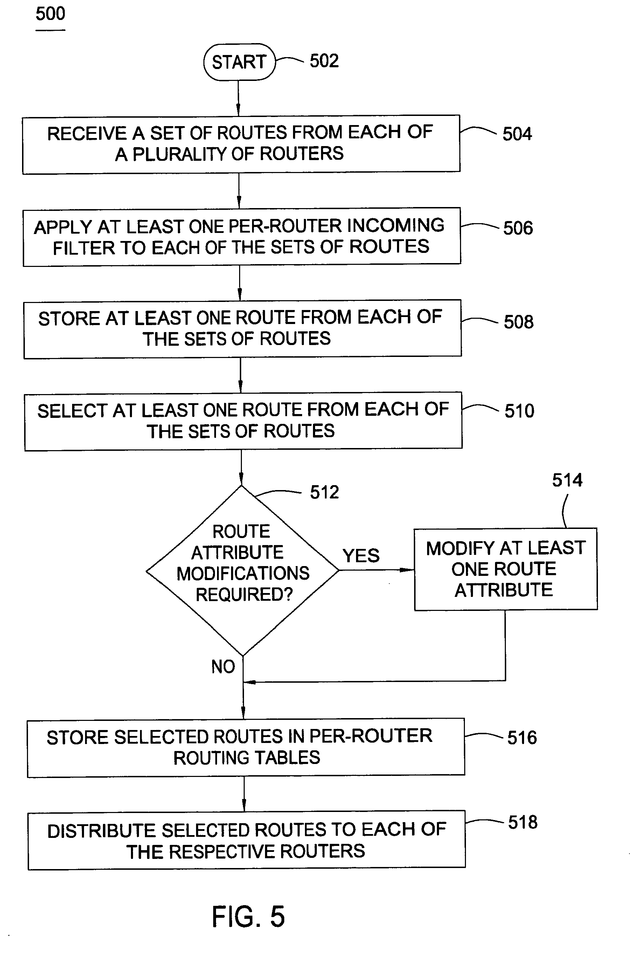

FIG. 5 depicts a detailed flow diagram of the method depicted in FIG. 4. As such, a single step as depicted in FIG. 4 may correspond to multiple steps as depicted in FIG. 5. Specifically, method 500 of FIG. 5 comprises a method for managing selection of routes in an Internet Protocol network. Although depicted as being performed serially, those skilled in the art will appreciate that at least a portion of the steps of method 500 may be performed contemporaneously. The method 500 is entered at step 502 and proceeds to step 504.

At step 504, a set of routes is received from each of a plurality of routers. A set of routes may comprise at least one route distributed by a router. For example, with respect to FIG. 3, RCP 310₁ may receive a set of routes from ER 304_{1A} comprising three routes, a set of routes from ER 304_{1B} comprising one route, a set of routes from ER 304_{1C} comprising seven routes, and a set of routes from ER 304_{1D} comprising twenty routes.

At step 506, at least one per-router incoming route filter may be applied to each of the received sets of routes. As such, the received sets of routes are filtered on a per-router basis using at least one route filter associated with each router from which a set of routes was received. A per-router incoming route filter operates to remove routes unsuitable for consideration during route selection processing. For example, with respect to FIG. 3, each of the per-router incoming route filters applied to the sets of routes received from ERs 304_{1A}, 304_{1C}, and 304_{1D} may result in removal of two unsuitable routes from each set of routes, leaving one, five, and eighteen routes remaining in each of the sets of routes, respectively. In this example, application of a per-router incoming filter to ERs 304_{1B} does not result in removal of a route, leaving one route remaining in the set of routes received from ERs 304_{1B}.

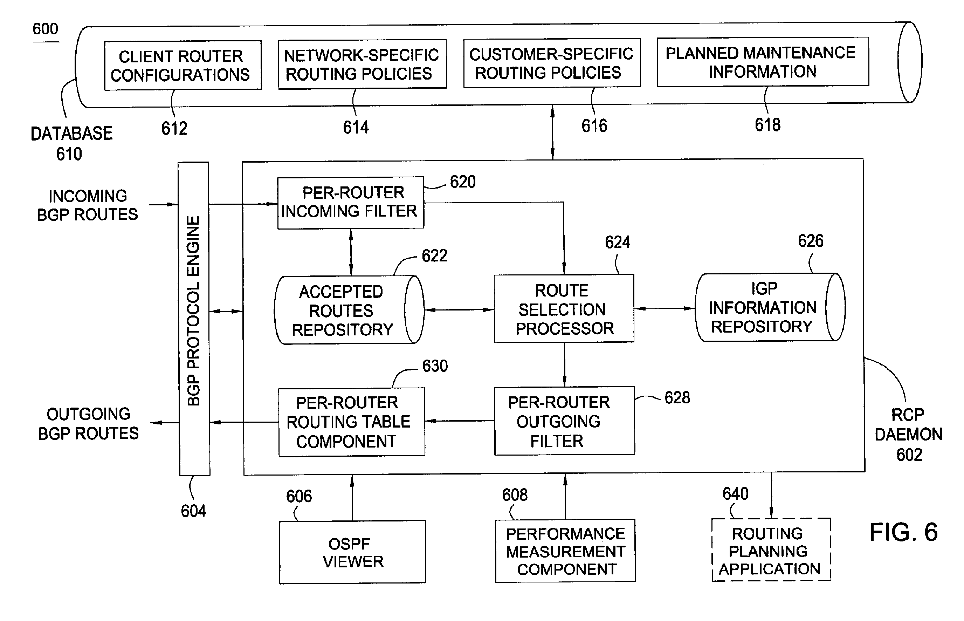

At step 508, at least one route from each of the received sets of routes is stored. For example, with respect to FIG. 3, at least a portion of each set of routes received from ERs 304_{1A}, 304_{1B}, 304_{1C}, and 304_{1D} may be stored. In one embodiment, the routes may be stored in at least one of: a memory, database, and like components for storing routes as known in the art. For example, with respect to FIG. 6, the routes may be stored in Accepted Routes Repository 622. In one embodiment, at least one route from each set of routes is stored for use during route selection processing (e.g., for use during the situation in which a route within the monitored network has been withdrawn). In another embodiment, storage of at least one route is optional.

At step 510, at least one route is selected from each of the sets of routes. In one embodiment, in which per-router incoming filters are utilized to filter the sets of routes prior to route selection processing (as described in step 506), the at least one route is selected from the filtered sets of routes. In continuation of the previous example, at least one route may be selected from the filtered sets of routes associated with ER 304_{1A} (one route set), ER 304_{1B} (one route set), ER 304_{1C} (five route set), and ER 304_{1D} (eighteen route set). In another embodiment, in which per-router incoming filters are not applied to received sets of routes, at least one route may be selected from the unfiltered sets of routes associated with ER 304_{1A} (three route set), ER 304_{1B} (one route set), ER 304_{1C} (seven route set), and ER 304_{1D} (twenty route set).

In one embodiment, route selection is performed according to at least one BGP route selection rule as known in the art. In another embodiment, in which BGP is not employed for route distribution, route selection may be performed according to at least one rule operable to determine at least one preferable route from a set of available routes. In one embodiment a "best" route is selected for use by a router in routing data packets. In another embodiment, at least one preferred route is selected for distribution to the router from which the selected route(s) was received. In this embodiment, the router implements additional route selection processing in order to select a "best" route from the set of preferred routes.

At step 512, a determination is made as to whether route attribute modification is required. In one embodiment, the determination as to whether route attribute modification is required is made with respect to selected routes. In other words, each route selected in step 510 is processed in order to determine whether any of the associated route attributes require modification prior to distribution of the selected route. In one embodiment, modification of route attributes associated with unselected routes is not performed. If route attribute modification is required, method 500 proceeds to step 514. If route attribute modification is not required, method 500 proceeds to step 516.

At step 514, at least one route attribute may be modified. In one embodiment, at least one of route attribute modification determination step 512 and route attribute modification step 514 may be implemented using at least one per-router outgoing filter. For example, assuming one route is selected from each of the sets of routes associated with ERs 304_{1A}, 304_{1B}, 304_{1C}, and 304_{1D}, respectively, each selected route may be filtered to determine whether associated route attributes require modification (and to implement the required attribute modification). For example, per-router outgoing filters may be employed to modify the "local preference" attribute value of the selected route associated with ER 304_{1B}, and to modify the "multiple exit discriminator" attribute value of the selected route associated with ER 304_{1C}.

At step 516, irrespective of whether route attributes associated with a selected route have been modified, each selected route is stored in a per-router routing table. In other words, for each router, each route selected from the received set of routes is stored in a per-router routing table dedicated to maintaining routes for that router. In one embodiment, the per-router routing tables are stored in at least one of: a memory, database, and like components for storing routing tables as known in the art.

At step 518, the selected routes (at least one per router) are distributed to the respective routers from which the routes were originally received. In one embodiment, selected routes are distributed using BGP. In another embodiment, selected routes may be distributed using similar deterministic protocols as known in the art. In one embodiment, the distributed routes are "best" routes for use by the respective routers in routing data packets. In another embodiment, the distributed routes are preferred routes from which the respective routers will select the "best" route for routing data packets.

FIG. 6 depicts a high level block diagram of a Routing Control Point (RCP) architecture. Specifically, RCP architecture 600 of FIG. 6 comprises RCP Daemon (RCPD) 602, BGP Protocol Engine (BPE) 604, OSPF Viewer (OV) 606, Performance Measurement Component (PMC) 608, database 610, and, optionally, Routing Planning Application (RPA) 640. As depicted in FIG. 6, RCPD 602 comprises Per-Router Incoming Filter (PRIF) 620, Accepted Routes Repository (ARR) 622, Route Selection Processor (RSP) 624, IGP Information Repository (IIR) 626, Per-Router Outgoing Filter (PROF) 628, and Per-Router Routing Table Component (PRRTC) 630.

The RCPD 602 controls BPE 604, which is responsible for maintaining BGP sessions to ERs and NRs using at least one of: iBGP and eBGP. The BPE 604 manages the details of the BGP protocol in terms of message exchanges, timer management, and the like. As such, all routes (incoming BGP routes) received by BPE 604 are passed to RCPD 602 for route filtering and selection. In one embodiment routes selected (outgoing BGP routes) by RCPD 602 for each router are passed to BPE 604, which exchanges the routes with the appropriate routers using the BGP protocol. In another embodiment, in which BGP is not used for route distribution, BPE 604 may be replaced with a similar protocol engine corresponding to the protocol used for route distribution.

As described herein, the RCPD 602 requires network topology information associated with the AS in which it is operating. In one embodiment, network topology information is provided by at least one functional component that monitors the IGP routing protocol in the monitored network. For example, as depicted in FIG. 6, OV 606 monitors link-state advertisements (LSAs) exchanged by the OSPF protocol and provides this network topology information to RCPD 602. In one embodiment, network topology information comprises at least one network topology parameter associated with a particular router or set of routers.

In one embodiment, RCPD 602 optionally utilizes network performance measurement information as input to the route selection process. In one embodiment, performance measurement information may comprise current network traffic information, such as traffic volume statistics, load performance metrics, and like performance measurement information. For example, as depicted in FIG. 6, PMC 608 optionally provides performance measurement information to RCPD 602.

In another embodiment, RCPD 602 optionally utilizes offline network configuration information not obtained from the running service provider network via BPE 604, OV 606, and PMC 608. In one such embodiment, the offline network configuration information may be retrieved from at least one database (illustratively, database 610) coupled to RCPD 602. For example, as depicted in FIG. 6, database 610 comprises client router configurations (CRCs) 612, network-specific routing policies (NSRPs) 614, customer-specific routing policies (CSRPs) 616, and planned maintenance information (PMI) 618.

In one embodiment, CRCs 612 are utilized by RCPD 602 in the route selection process and may comprise router configuration information (e.g., at least one router configuration parameter) associated with each of the routers with which RCPD 602 communicates. For example, router configuration information may comprise router IP address, router BGP protocol (iBGP or eBGP), and like router configuration parameters. In another embodiment, NSRPs 614 are utilized by RCPD 602 in the route selection process, and may comprise policies such as controlling which routes are advertised to each edge router, controlling which routes are never accepted in to the system, and like network routing policies and associated routing policy parameters. In another embodiment, the CSRPs 616 are utilized by RCPD 602 in the route selection process. For example, voice-over-IP traffic of a customer supported by the service provider network may be routed via a path that is different from the default shortest path (given by the OSPF protocol) if it has more desirable characteristics for that application than the default shortest path.

In one embodiment, PMI 618 may be utilized in route selection processing. In one such embodiment, planned maintenance information may be input to RCPD 602 to ensure that planned network maintenance does not result in network service disruption. For example, assuming that a network link (e.g., a core communication link, an edge communication link, and the like) must be deactivated for maintenance, RCPD 602 uses PMI 618 to remove network traffic (via route selection) from the network link in a controlled manner (i.e., without overloading other network links) prior to beginning of the maintenance period.

In one embodiment, since RCPD 602 has access to all routes available in the service provider network in one logically centralized location, the RCPD 602 may perform an overall analysis of routing within the service provider network, including debugging of routing problems. For example, at least a portion of the results of the routing analysis may be provided to at least one associated application (illustratively, RPA 640) for further processing and analysis.

Although depicted as distinct portions of a single database, those skilled in the art will appreciate that at least a portion of the information in CRCs 612, NSRPs 614, CSRPs 616, and PMI 618, and associated information, may be stored in an un-partitioned database, individual databases, a plurality of databases, and like configurations for storing such information as known in the art. Furthermore, it should be noted that offline network information (in addition to CRCs 612, NSRPs 614, CSRPs 616, and PMI 618) may be utilized in the route selection processing methodologies of the present invention.

As depicted in FIG. 6, RCPD 602 comprises PRIF 620, ARR 622, RSP 624, IIR 626, PROF 628, and PRRTC 630. The PRIF 620 receives incoming routes from BPE 604 is coupled to ARR 622 and RSP 624. The RSP 624 receives filtered routes from PRIF 620, and is coupled to ARR 622, IIR 626, and PROF 628. The PROF 628 receives selected routes from RSP 624, and the output of PROF 628 is coupled to the input of PRRTC 630. The output of PRRTC 630 is coupled to BPE 604 for transmitting outgoing routes.

The incoming BGP routes are received by RCPD 602 from BPE 604 and forwarded to PRIF 620. The incoming BGP routes are received by BPE 604 from routers with which the RCP has established a session. For example, with respect to FIG. 1, incoming BGP routes are received by BPE 604 from ERs 104 (via iBGP). Similarly, with respect to FIG. 2, incoming BGP routes are received by BPE 604 from ERs 104 (via iBGP) and NRs 110 (via eBGP). Similarly, with respect to FIG. 3, incoming BGP routes are received by respective BPEs 604 associated with each of the respective RCPs 310 from the respective ERs 304 (via iBGP).

The PRIF 620 performs filtering on incoming BGP routes to remove incoming BGP routes that are not accepted from a particular router and incoming BGP routes that are unsuitable for consideration during route selection processing. In one embodiment, PRIF 620 utilizes routing policies (e.g., at least one of the NSRPs 614 and CSRPs 616 from database 610) in order to identify incoming BGP routes that are not accepted from a particular router and incoming BGP routes that are unsuitable for consideration during route selection processing.

The accepted incoming BGP routes are output from PRIF 620 and stored in ARR 622. In one embodiment, all accepted BGP routes are stored in ARR 622, irrespective of whether the accepted BGP routes are used during route selection processing. The storage of accepted BGP routes in ARR 622 provides the RCP with readily available alternative routes for the case in which advertised routes are withdrawn. In one embodiment, ARR 622 provides accepted BGP routes and associated information to RPA 640.

The accepted BGP routes output from PRIF 620 are input to RSP 624. For each accepted BGP route, RSP 624 determines, from the point of view of each of the respective routers, whether that accepted BGP route is selected for use in the network. In other words, RSP 624 performs processing required in order to select at least one preferred BGP route for use in the network. It should be noted that BGP route selection is deterministic in that preferred routes are selected according to predefined rules. In one embodiment, the best BGP routes are selected based on path attributes, while attributes such as delay, bandwidth, and latency are not considered during BGP route selection.

For example, a first rule may comprise eliminating a route from selection consideration based upon a determination that the associated next hop address is inaccessible. A second rule may comprise use of protocol preference such that selection of a route depends on a comparison of protocol preference values associated with respective routes. For example, routing protocols may be assigned respective protocol preference values between 0 and 255 (e.g., assigning a protocol preference of 170 for BGP, assigning a protocol preference of 10 for direct routing, and the like). A third rule may comprise selection of a route with the highest (best) BGP local preference. A fourth rule may comprise selection of a route with the fewest ASs listed in the AS path attribute. A fifth rule may comprise selection of a route having the lowest origin code (e.g., a route having an origin of IGP is selected over a route having an origin of EGP). It should be noted that fewer or more, as well as different, route selection rules may be used.

In one embodiment, various combinations of route selection rules may be employed such that the route selection rules are applied according to a predefined order of importance. For example, with respect to the route selection rules listed above, the fourth rule comprising selection of a route having the fewest ASs listed in the AS path may be applied following a determination that the considered BGP routes have the same BGP local preference (as determined from the third rule described above). Similarly, the fifth rule comprising selection of a route having the lowest origin code may be applied following a determination that the considered BGP routes have the same number of ASs listed in the AS path attribute (as determined from the fourth rule described above).

The BGP routes selected by RSP 624 are input to PROF 628. The PROF 628 receives the selected BGP routes and has a capability to modify at least one BGP route attribute. The modifiable BGP route attributes may comprise weight, origin code, AS path, AS set, atomic aggregate, next-hop, multiple exit discriminator, local preference, community, extended community, multi-protocol addresses, and like BGP route attributes as known in the art. In one embodiment, the filtering of selected BGP routes is performed on a per-router basis. It should be noted that other attributes may be modifiable in embodiments in which a protocol other than BGP is used for route distribution.

The BGP routes filtered by PROF 628 are input to the PRRTC 630. The PRRTC 630 receives the filtered BGP routes (optionally, comprising modified route attributes) and places the filtered BGP routes in at least one per-router routing table maintained by the RCP. The filtered BGP routes are then communicated by PRRTC 630 to the BPE 604 for distribution towards routers in the network monitored by the RCP. It should be noted that distribution of the filtered BGP routes by BPE 604 depends upon the network architecture and the associated routers to which the routes are distributed.

The functionality described with respect to FIG. 6 and, specifically, with respect to route selection processing performed by RSP 624, is applicable to a variety of architectures. For example, the functionality described with respect to FIG. 6 (and the associated methodologies) may be utilized with an architecture in which the RCP maintains iBGP sessions (depicted in FIG. 1), an architecture in which the RCP maintains iBGP sessions and eBGP sessions (depicted in FIG. 2), an architecture in which a plurality of RCPs are deployed for inter-AS route exchange (depicted in FIG. 3), and like architectures.

It should be noted that although depicted as physically distinct components, the RCP functional components associated with RCPD 602 may be implemented in a variety of configurations. As such, it is contemplated by the inventors that at least a portion of the components, functions, and information associated with the RCPD 602 may be combined into fewer functional components/databases. Similarly, it is contemplated by the inventors that various components, functions, and information may be implemented by other functional components, or that the components, functions, and information may be distributed across the various functional components/databases in a different manner.

Using various combinations of the components and information described herein, RCPD 602 provides functionality equivalent to traditional BGP routing architectures, while enabling simplified per-router configuration and eliminating various problems typically associated with scaling of iBGP in service provider networks. Furthermore, it should be noted that the architecture of RCPD 602 facilitates support for additional functionality and applications. In one embodiment, since RCPD 602 provides flexibility in information that may be input to the route selection process, additional configurations and policies (not depicted) may be introduced into the service provider network and taken into account during route selection processing.

It should be noted that although described herein primarily with respect to BGP, various other protocols may be employed for communication within AS 102 and the ASs 302. In one embodiment, for example, Protocol Independent Multicast (PIM) protocol may be utilized for multicasting route information, as well as other information. In another embodiment, Reservation Protocol (RSVP) may be used in support of Multi-Protocol Label Switching (MPLS) traffic engineering functions. In another embodiment, Label Distribution Protocol (LDP) may be used for performing MPLS path setup.

Furthermore, the architectures depicted and described herein enable a service provider to offer various additional services currently unavailable from service providers. For example, a service provider may offer routing control and seamless inter-working between a plurality of service providers. In another example, a service provider may offer dynamic MPLS-based virtual private networks (VPNs) in which route attributes may be dynamically modified for changing the membership of a VPN. In another example, a service provider may implement Distributed Denial of Service (DDOS) traffic control such that a specific traffic type may be directed to a specific location from a central control point. In another example, a service provider may transition traffic from planned maintenance areas in order to perform hitless (i.e., not service impacting) maintenance in the service provider network. In another example, a service provider may enable specific application services (e.g., voice, video, and the like) to transport customers from a central control point.

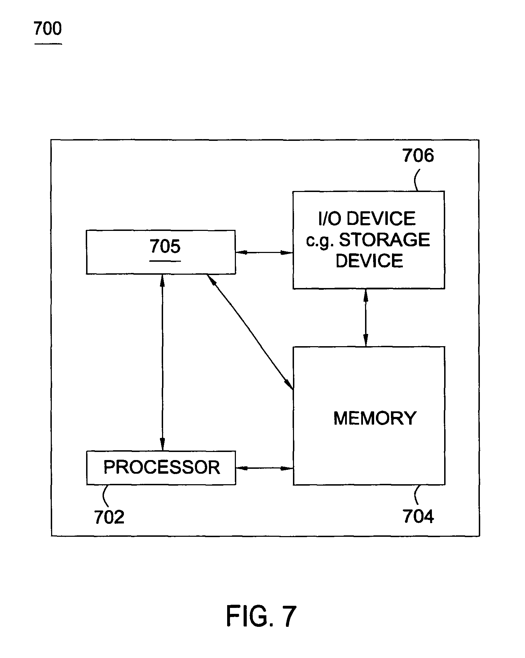

FIG. 7 depicts a high level block diagram of a general purpose computer system suitable for use in performing the functions described herein. As depicted in FIG. 7, the system 700 comprises a processor element 702 (e.g., a CPU), a memory 704, e.g., random access memory (RAM) and/or read only memory (ROM), a routing control point module 705, and various input/output devices 706 (e.g., storage devices, including but not limited to, a tape drive, a floppy drive, a hard disk drive or a compact disk drive, a receiver, a transmitter, a speaker, a display, an output port, and a user input device (such as a keyboard, a keypad, a mouse, and the like)).

It should be noted that the present invention can be implemented in software and/or in a combination of software and hardware, e.g., using application specific integrated circuits (ASIC), a general purpose computer or any other hardware equivalents. In one embodiment, routing control point module or process 705 can be loaded into memory 704 and executed by processor 702 to implement the functions as discussed above. As such, the present routing control point process 705 (including associated data structures) of the present invention can be stored on a computer readable medium or carrier, e.g., RAM memory, magnetic or optical drive or diskette and the like.

It should be noted that in one embodiment, RCP architecture 600 of FIG. 6 may be implemented as routing control point module 705 of general purpose computer system 700. In another embodiment, RCPD 602 of FIG. 6 may be implemented as routing control point module 705 of general purpose computer system 700. In this embodiment, at least a portion of database 610 may be implemented using various input/output devices 706 (e.g., storage devices). Furthermore, at least a portion of the functionality of BPE 604, OV 606, PMC 608, and RPA 640 may be implemented using various input/output devices 706.

## Claims

1. A method for managing route selection in a network (100), comprising
receiving (404, 504) a respective set of routes from each of a plurality of routers (104);
filtering(406, 506) each of said sets of routes received from said routers (104) for removing one or more unsuitable routes by using at least one route filter associated with the router from which the set of routes was received; and
selecting (408, 510) at least one route from each of said filtered sets of routes according to routing information associated with the router from which the set of routes was received;
wherein the routers (104) are not fully meshed with one another, and a routing control point (106) external to the routers (104), that maintains a respective single connection with each of the routers (104), is used to carry out the steps of receiving a respective set of routes from each of the routers (104), filtering each of said sets of routes for removing one or more unsuitable routes and selecting at least one route from each of said filtered sets of routes.

2. The method of claim 1, wherein said selecting (408, 510) comprises:
applying at least one rule to each of said filtered sets of routes, wherein said at least one rule is applied using said routing information.

3. The method of claim 2, wherein said applying of at least one rule comprises:
comparing (512) at least one attribute associated with each route in each of said filtered sets of routes.

4. The method of claim 3, wherein said at least one attribute comprises at least one of: a weight, an origin code, an autonomous system path, an autonomous system set, an atomic aggregate, a next-hop, a multiple exit discriminator, a local preference, a community, an extended community, and a multi-protocol address.

5. The method of any preceding claim, wherein said routing information comprises at least one of: a route attribute, a network topology parameter, a routing policy parameter, and a router configuration parameter.

6. The method of any preceding claim, further comprising:
distributing (518) said at least one selected route to each of said plurality of routers.

7. The method of any preceding claim, further comprising:
modifying (514) at least one route attribute from said routing information,
wherein said at least one route attribute corresponds to at least one of said selected routes.

8. The method of any preceding claim, wherein said at least one route comprises a best route or at least one preferred route.

9. A computer readable storage medium (704) storing a software program, that, when executed by a computer, causes the computer to perform a method comprising:
receiving (404, 504) a respective set of routes from each of a plurality of routers (104); filtering (406, 506) each of said sets of routes received from said routers (104) for removing one or more unsuitable routes by using at least one route filter associated with the router from which the set of routes was received; and
selecting (408, 510) at least one route from each of said filtered sets of routes according to routing information associated with the router from which the set of routes was received;
wherein the routers (104) are not fully meshed with one another, and a routing control point (106) external to the routers (104), that maintains a respective single connection with each of the routers (104), is used to carry out the steps of receiving a respective set of routes from each of the routers (104), filtering each of said sets of routes for removing one or more unsuitable routes and selecting at least one route from each of said filtered sets of routes.

10. The computer readable storage medium of claim 9, wherein said selecting (408, 510) comprises:
applying at least one rule to each of said filtered sets of routes, wherein said at least one rule is applied using said routing information.

11. The computer readable storage medium of claim 10, wherein said applying at least one rule comprises:
comparing (512) at least one attribute associated with each route in each of said filtered sets of routes.

12. The computer readable storage medium of claim 9, 10 or 11, wherein said routing information comprises at least one of: a route attribute, a network topology parameter, a routing policy parameter, and a router configuration parameter.

13. The computer readable storage medium of any one of claims 9 to 12, further comprising:
distributing (518) said at least one selected route towards each of said plurality of routers.

14. The computer readable storage medium of any one of claims 9 to 13, further comprising:
modifying (514) at least one route attribute from said routing information,
wherein said at least one route attribute corresponds to at least one of said selected routes.

15. The computer readable storage medium of any one of claims 9 to 14,
wherein said at least one route comprises at least one preferred route.

16. An apparatus (106) for managing route selection in a network (100), comprising;
means for receiving (604) a respective set of routes from each of a plurality of routers (104);means for filtering (620) each of said sets of routes received from said routers (104) for removing one or more unsuitable routes by using at least one route filter associated with the router from which the set of routes was received; and
means for selecting (624) at least one route from each of said filtered sets of routes according to routing information associated with the router from which the set of routes was received;
wherein the routers (104) are not fully meshed with one another, and a routing control point (106) external to the routers (104), that maintains a respective single connection with each of the routers (104), is used to carry out the steps of receiving a respective set of routes from each of the routers (104), filtering each of said sets of routes for removing one or more unsuitable routes and selecting at least one route from each of said filtered sets of routes.

17. The apparatus of claim 16, wherein said means for selecting (624) comprises:
means for applying at least one rule to each of said filtered sets of routes, wherein said at least one rule is applied using said routing information.

## Patentansprüche

1. Verfahren zur Verwaltung der Leitwegauswahl in einem Netzwerk (100), umfassend:
Empfangen (404, 504) eines jeweiligen Satzes von Leitwegen von jedem aus einer Vielzahl von Routern (104);
Filtern (406, 506) jedes der Sätze von Leitwegen, die von den Routern (104) kommend empfangen werden, zum Entfernen eines oder mehrerer ungeeigneter Leitwege unter Verwendung zumindest eines Leitwegfilters, das dem Router zugeordnet ist, von dem der Satz von Leitwegen empfangen wurde; und
Auswählen (408, 510) zumindest eines Leitwegs aus jedem der gefilterten Sätze von Leitwegen gemäß Leitweglenkungsinformation, die dem Router zugeordnet ist, von dem der Satz von Leitwegen empfangen wurde;
wobei die Router (104) nicht vollständig miteinander vernetzt sind und ein Leitweglenkungskontrollpunkt (106) außerhalb der Router (104), der eine jeweilige einzelne Verbindung mit jedem der Router (104) aufrecht erhält, verwendet wird, um die folgenden Schritte durchzuführen:
Empfangen eines jeweiligen Satzes von Leitwegen von jedem der Router (104), Filtern jedes der Sätze von Leitwegen zum Entfernen einer oder mehrerer ungeeigneter Leitwege und Auswählen zumindest eines Leitwegs aus jedem der gefilterten Sätze von Leitwegen.

2. Verfahren nach Anspruch 1, wobei das Auswählen (408, 510) umfasst:
Anwenden zumindest einer Regel auf jeden der gefilterten Sätze von Leitwegen, wobei die zumindest eine Regel unter Verwendung der Leitweglenkungsinformation angewendet wird.

3. Verfahren nach Anspruch 2, wobei das Anwenden von zumindest einer Regel umfasst:
Vergleichen (512) zumindest eines Attributs, das jedem Leitweg in jedem der gefilterten Sätze von Leitwegen zugeordnet ist.

4. Verfahren nach Anspruch 3, wobei das zumindest eine Attribut zumindest eines von Folgendem umfasst: ein Gewicht, einen Ursprungscode, einen autonomen Systemweg, einen autonomen Systemsatz, ein unteilbares Aggregat, eine nächste Teilstrecke, einen Multi-Exit-Diskriminator, eine lokale Präferenz, eine Gemeinschaft, eine erweiterte Gemeinschaft und eine Mehrprotokolladresse.

5. Verfahren nach einem der vorhergehenden Ansprüche, wobei die Leitweglenkungsinformation zumindest eines von Folgendem umfasst: ein Leitwegattribut, einen Netzwerktopologieparameter, einen Leitweglenkungsstrategieparameter und einen Routerkonfigurationsparameter.

6. Verfahren nach einem der vorhergehenden Ansprüche, ferner umfassend:
Verteilen (518) des zumindest einen ausgewählten Leitwegs an jeden aus der Vielzahl von Routern.

7. Verfahren nach einem der vorhergehenden Ansprüche, ferner umfassend:
Modifizieren (514) zumindest eines Leitwegattributs aus der Leitweglenkungsinformation, wobei das zumindest eine Leitwegattribut zumindest einem der ausgewählten Leitwege entspricht.

8. Verfahren nach einem der vorhergehenden Ansprüche, wobei der zumindest eine Leitweg einen besten Leitweg oder zumindest einen bevorzugten Leitweg umfasst.

9. Computerlesbares Speichermedium (704), das ein Softwareprogramm speichert, das, wenn es von einem Computer ausgeführt wird, bewirkt, dass der Computer ein Verfahren durchführt, das umfasst:
Empfangen (404, 504) eines jeweiligen Satzes von Leitwegen von jedem aus einer Vielzahl von Routern (104); Filtern (406, 506) jedes der Sätze von Leitwegen, die von den Routern (104) kommend empfangen werden, zum Entfernen einer oder mehrerer ungeeigneter Leitwege unter Verwendung zumindest eines Leitwegfilters, der dem Router zugeordnet ist, von dem der Satz von Leitwegen empfangen wurde; und
Auswählen (408, 510) zumindest eines Leitwegs aus jedem der gefilterten Sätze von Leitwegen gemäß Leitweglenkungsinformation, die dem Router zugeordnet ist, von dem der Satz von Leitwegen empfangen wurde;
wobei die Router (104) nicht vollständig miteinander vernetzt sind und ein Leitweglenkungskontrollpunkt (106) außerhalb der Router (104), der eine jeweilige einzelne Verbindung mit jedem der Router (104) aufrecht erhält, verwendet wird, um die folgenden Schritte durchzuführen:
Empfangen eines jeweiligen Satzes von Leitwegen von jedem der Router (104), Filtern jedes der Sätze von Leitwegen zum Entfernen einer oder mehrerer ungeeigneter Leitwege und Auswählen zumindest eines Leitwegs aus jedem der gefilterten Sätze von Leitwegen.

10. Computerlesbares Speichermedium nach Anspruch 9, wobei das Auswählen (408, 510) umfasst:
Anwenden zumindest einer Regel auf jeden der gefilterten Sätze von Leitwegen, wobei die zumindest eine Regel unter Verwendung der Leitweglenkungsinformation angewendet wird.

11. Computerlesbares Speichermedium nach Anspruch 10, wobei das Anwenden zumindest einer Regel umfasst:
Vergleichen (512) zumindest eines Attributs, das jedem Leitweg in jedem der gefilterten Sätze von Leitwegen zugeordnet ist.

12. Computerlesbares Speichermedium nach Anspruch 9, 10 oder 11, wobei die Leitweglenkungsinformation zumindest eines von Folgendem aufweist: ein Leitwegattribut, einen Netzwerktopologieparameter, einen Leitweglenkungsstrategieparameter und einen Routerkonfigurationsparameter.

13. Computerlesbares Speichermedium nach einem der Ansprüche 9 bis 12, ferner umfassend:
Verteilen (518) des zumindest einen ausgewählten Leitwegs an jeden aus der Vielzahl von Routern.

14. Computerlesbares Speichermedium nach einem der Ansprüche 9 bis 13, ferner umfassend:
Modifizieren (514) zumindest eines Leitwegattributs aus der Leitweglenkungsinformation, wobei das zumindest eine Leitwegattribut zumindest einem der ausgewählten Leitwege entspricht.

15. Computerlesbares Speichermedium nach einem der Ansprüche 9 bis 14, wobei der zumindest eine Leitweg zumindest einen bevorzugte Leitweg umfasst.

16. Vorrichtung (106) zur Verwaltung der Leitwegauswahl in einem Netzwerk (100), umfassend:
Mittel zum Empfangen (604) eines jeweiligen Satzes von Leitwegen von jedem aus einer Vielzahl von Routern (104); Mittel zum Filtern (620) jedes der Sätze von Leitwegen, die von den Routern (104) kommend empfangen werden, zum Entfernen eines oder mehrerer ungeeigneter Leitwege unter Verwendung zumindest eines Leitwegfilters, das dem Router zugeordnet ist, von dem der Satz von Leitwegen empfangen wurde; und
Mittel zum Auswählen (624) zumindest eines Leitwegs aus jedem der gefilterten Sätze von Leitwegen gemäß Leitweglenkungsinformation, die dem Router zugeordnet ist, von dem der Satz von Leitwegen empfangen wurde;
wobei die Router (104) nicht vollständig miteinander vernetzt sind und ein Leitweglenkungskontrollpunkt (106) außerhalb der Router (104), der eine jeweilige einzelne Verbindung mit jedem der Router (104) aufrecht erhält, verwendet wird, um die folgenden Schritte durchzuführen:
Empfangen eines jeweiligen Satzes von Leitwegen von jedem der Router (104), Filtern jedes der Sätze von Leitwegen zum Entfernen einer oder mehrerer ungeeigneter Leitwege und Auswählen zumindest eines Leitwegs aus jedem der gefilterten Sätze von Leitwegen.

17. Vorrichtung nach Anspruch 16, wobei die Mittel zum Auswählen (624) umfassen:
Mittel zum Anwenden zumindest einer Regel auf jeden der gefilterten Sätze von Leitwegen, wobei die zumindest eine Regel unter Verwendung der Leitweglenkungsinformation angewendet wird.

## Revendications

1. Procédé pour gérer une sélection de trajet dans un réseau (100), consistant à :
recevoir (404, 504) un ensemble respectif de trajets de chacun d'une pluralité de routeurs (104) ;
filtrer (406, 506) chacun desdits ensembles de trajets reçus desdits routeurs (104) pour retirer un ou plusieurs trajets inappropriés en utilisant au moins un filtre de trajet associé au routeur duquel l'ensemble de trajets a été reçu ; et
sélectionner (408, 510) au moins un trajet dans chacun desdits ensembles filtrés de trajets en fonction des informations d'acheminement associées au routeur duquel l'ensemble de trajets a été reçu ;
dans lequel les routeurs (104) ne sont pas totalement interconnectés les uns aux autres, et un point de commande d'acheminement (106) externe aux routeurs (104), qui maintient une connexion unique respective avec chacun des routeurs (104), est utilisé pour mettre en oeuvre les étapes consistant à recevoir un ensemble respectif de trajets de chacun des routeurs (104), filtrer chacun desdits ensembles de trajets pour retirer un ou plusieurs trajets inappropriés et sélectionner au moins un trajet dans chacun desdits ensembles filtrés de trajets.

2. Procédé selon la revendication 1, dans lequel ladite sélection (408, 510) consiste à :
appliquer au moins une règle à chacun desdits ensembles filtrés de trajets, dans lequel ladite au moins une règle est appliquée en utilisant lesdites informations d'acheminement.

3. Procédé selon la revendication 2, dans lequel ladite application d'au moins une règle consiste à :
comparer (512) au moins un attribut associé à chaque trajet dans chacun desdits ensembles filtrés de trajets.

4. Procédé selon la revendication 3, dans lequel ledit au moins un attribut comprend au moins l'un:
d'un coefficient de pondération, d'un code d'origine, d'un trajet de système autonome, d'un ensemble de système autonome, d'un agrégat atomique, d'un saut suivant, d'un discriminateur à sorties multiples, d'une préférence locale, d'une communauté, d'une communauté étendue et d'une adresse multi-protocole.

5. Procédé selon l'une quelconque des revendications précédentes, dans lequel lesdites informations d'acheminement comprennent au moins l'un : d'un attribut de trajet, d'un paramètre de topologie de réseau, d'un paramètre de politique d'acheminement et d'un paramètre de configuration de routeur.

6. Procédé selon l'une quelconque des revendications précédentes, consistant en outre à :
distribuer (518) ledit au moins un trajet sélectionné vers chacun de ladite pluralité de routeurs.

7. Procédé selon l'une quelconque des revendications précédentes, consistant en outre à :
modifier (514) au moins un attribut de traj et parmi lesdites informations d'acheminement, dans lequel ledit au moins un attribut de trajet correspond à au moins l'un desdits trajets sélectionnés.

8. Procédé selon l'une quelconque des revendications précédentes, dans lequel ledit au moins un trajet comprend un meilleur trajet ou au moins un trajet préféré.

9. Support de mémorisation pouvant être lu par un ordinateur (704) mémorisant un programme logiciel qui, lorsqu'il est exécuté par un ordinateur, amène l'ordinateur à mettre en oeuvre un procédé consistant à :
recevoir (404, 504) un ensemble respectif de trajets de chacun d'une pluralité de routeurs (104) ; filtrer (406, 506) chacun desdits ensembles de trajets reçus desdits routeurs (104) pour retirer un ou plusieurs trajets inappropriés en utilisant au moins un filtre de trajet associé au routeur duquel l'ensemble de trajets a été reçu ; et
sélectionner (408, 510) au moins un trajet dans chacun desdits ensembles filtrés de trajets en fonction des informations d'acheminement associées au routeur duquel l'ensemble de trajets a été reçu ;
dans lequel les routeurs (104) ne sont pas totalement interconnectés les uns aux autres, et un point de commande d'acheminement (106) externe aux routeurs (104), qui maintient une connexion unique respective avec chacun des routeurs (104), est utilisé pour mettre en oeuvre les étapes consistant à recevoir un ensemble respectif de trajets de chacun des routeurs (104), filtrer chacun desdits ensembles de trajets pour retirer un ou plusieurs trajets inappropriés et sélectionner au moins un trajet dans chacun desdits ensembles filtrés de trajets.

10. Support de mémorisation pouvant être lu par un ordinateur selon la revendication 9, dans lequel ladite sélection (408, 510) consiste à :
appliquer au moins une règle à chacun desdits ensembles filtrés de trajets, dans lequel ladite au moins une règle est appliquée en utilisant lesdites informations d'acheminement.

11. Support de mémorisation pouvant être lu par un ordinateur selon la revendication 10, dans lequel ladite application d'au moins une règle consiste à :
comparer (512) au moins un attribut associé à chaque trajet dans chacun desdits ensembles filtrés de trajets.

12. Support de mémorisation pouvant être lu par un ordinateur selon la revendication 9, 10 ou 11, dans lequel lesdites informations d'acheminement comprennent au moins l'un: d'un attribut de trajet, d'un paramètre de topologie de réseau, d'un paramètre de politique d'acheminement et d'un paramètre de configuration de routeur.

13. Support de mémorisation pouvant être lu par un ordinateur selon l'une quelconque des revendications 9 à 12, consistant en outre à :
distribuer (518) ledit au moins un trajet sélectionné vers chacun de ladite pluralité de routeurs.

14. Support de mémorisation pouvant être lu par un ordinateur selon l'une quelconque des revendications 9 à 13, consistant en outre à :
modifier (514) au moins un attribut de trajet parmi lesdites informations d'acheminement, dans lequel ledit au moins un attribut de trajet correspond à au moins l'un desdits trajets sélectionnés.

15. Support de mémorisation pouvant être lu par un ordinateur selon l'une quelconque des revendications 9 à 14, dans lequel ledit au moins un trajet comprend au moins un trajet préféré.

16. Dispositif (106) pour gérer une sélection de trajet dans un réseau (100), comprenant :
des moyens pour recevoir (604) un ensemble respectif de trajets de chacun d'une pluralité de routeurs (104), des moyens pour filtrer (620) chacun desdits ensembles de trajets reçus desdits routeurs (104) pour retirer un ou plusieurs trajets inappropriés en utilisant au moins un filtre de trajet associé au routeur duquel l'ensemble de trajets a été reçu ; et
des moyens pour sélectionner (624) au moins un trajet dans chacun desdits ensembles filtrés de trajets en fonction des informations d'acheminement associées au routeur duquel l'ensemble de trajets a été reçu ;
dans lequel les routeurs (104) ne sont pas totalement interconnectés les uns aux autres, et un point de commande d'acheminement (106) externe aux routeurs (104), qui maintient une connexion unique respective avec chacun des routeurs (104), est utilisé pour mettre en oeuvre les étapes consistant à recevoir un ensemble respectif de trajets de chacun des routeurs (104), filtrer chacun desdits ensembles de trajets pour retirer un ou plusieurs trajets inappropriés et sélectionner au moins un trajet à partir de chacun desdits ensembles filtrés de trajets.

17. Dispositif selon la revendication 16, dans lequel lesdits moyens pour sélectionner (624) comprennent :
des moyens pour appliquer au moins une règle à chacun desdits ensembles filtrés de trajets, dans lequel ladite au moins une règle est appliquée en utilisant lesdites informations d'acheminement.
